# EUROPEAN PATENT APPLICATION

(11) **EP 4 682 357 A1**
(43) Date of publication of application: **21.01.2026**
(21) Application number: 24771223.5
(22) Date of filing: 15.03.2024
(51) Int. Cl.: F01N 3/04, F02B 43/10, B63J 4/00, B63H 21/38, B63B 17/00

(54) **AMMONIA VENT GAS TREATMENT SYSTEM AND VENT GAS TREATMENT METHOD USING SAME**

(30) Priority: 15.03.2023 KR 20230033906; 30.03.2023 KR 20230042123
(71) Applicant: HD Korea Shipbuilding & Offshore Engineering Co., Ltd., Seongnam-si, Gyeonggi-do 13553 (KR); Hyundai Heavy Industries Co., Ltd., Ulsan 44032 (KR)
(72) Inventor: AHN, Yeong Jong, Seongnam-si, Gyeonggi-do 13553 (KR); KIM, Min Seong, Seongnam-si, Gyeonggi-do 13553 (KR); LEE, Chang Woo, Seongnam-si, Gyeonggi-do 13553 (KR); JUNG, Han Sol, Seongnam-si, Gyeonggi-do 13553 (KR)
(74) Representative: Cabinet Netter
(86) International application number: PCT/KR2024/003301
(87) International publication number: WO 2024/191224

(57) **Abstract**

The present disclosure relates to an ammonia vent gas treatment system for an ammonia-propelled vessel. The vent gas treatment system includes: a vent gas treatment facility configured to recover and treat ammonia discharged from a consumer of ammonia fuel or from an intermediate component that supplies ammonia fuel to the consumer; a wastewater tank for storing ammonia water discharged from the vent gas treatment facility; and a gas pipe for returning ammonia gas generated in the tank to the vent gas treatment facility, thereby efficiently addressing not only the discharge of ammonia water but also the problem of ammonia gas in the tank storing the ammonia water

## Description

### Technical Field

The following description relates to a system for efficiently treating ammonia vent gas in an ammonia-propelled vessel or a dual-fuel engine vessel, and a vent gas treatment method using the same, and specifically, to a vent gas treatment system and a vent gas treatment method using the same, which mitigates the problem of ammonia gas in the treatment of ammonia water recovered by a vent gas treatment facility for preventing ammonia leakage in an ammonia-propelled vessel.

### Background Art

Generally, vessels are propelled using a diesel engine that generates driving force by using diesel oil, a gas engine that generates driving force by using a gas such as LNG, or a dual-fuel engine that generates driving force by using a mixture of diesel oil and gas.

Recently, with the strengthening of IMO environmental regulations, there has been an increasing demand for eco-friendly and high-efficiency engines, and research on propulsion systems using various fuels is actively being conducted.

Ammonia, since it does not contain carbon, has attracted attention as an eco-friendly fuel; however, ammonia has relatively unfavorable characteristics for combustion compared to conventionally used fuels.

For example, upon the use of ammonia as fuel, its combustion reactivity is lower than that of other fuels, resulting in exhaust gas containing unburned ammonia (ammonia slip). Unburned ammonia is known to be a toxic substance and may cause another type of environmental pollution.

Various ammonia vent gas treatment systems have been proposed to solve the problem of ammonia being included in and discharged with exhaust gas; however, an ammonia vent gas treatment system using fresh water has the disadvantage of being large in size, which creates unfavorable conditions when deployed in an ammonia-propelled vessel or a dual-fuel engine vessel.

### Disclosure of Invention

### Technical Problem

To solve the aforementioned problems, in one aspect, the present disclosure provides an ammonia vent gas treatment system that maximizes the recovery and reuse of ammonia discharged during shutdown of an ammonia-propelled vessel, by using an ammonia vent gas treatment facility, and that additionally improves the ammonia gas problem in the treatment of ammonia water recovered by the vent gas treatment facility.

In a specific embodiment, the present disclosure provides a vent gas treatment system that solves the problem in which, even upon recovering ammonia water through the vent gas treatment facility, ammonia evaporates from residual ammonia remaining on the inner wall of a tank storing the recovered ammonia water, thereby allowing ammonia gas at a concentration exceeding an allowable level to be discharged externally.

In a preferred embodiment, the present disclosure provides an improved vent gas treatment system that eliminates the problem in which, although ammonia gas may be absorbed through water, ammonia re-evaporates from the water in which ammonia is dissolved, thereby allowing ammonia at or above a hazardous concentration to be discharged externally.

In addition, the present disclosure provides a control method for automatically detecting instances where the ammonia concentration in the vent gas is at or above a predetermined threshold, and for reducing the ammonia concentration in the vent gas in different ways depending on whether a fuel supply valve is open.

In another aspect, the present disclosure provides a system for efficiently treating ammonia vent gas by using acidic water discharged from a consumer of fuel as wash water for a vent gas treatment facility that performs ammonia recovery processing.

In another aspect, the present disclosure provides a method of treating ammonia vent gas using the aforementioned system, wherein the method efficiently controls one or more of the amount of acidic water supplied as ammonia wash water and the supply direction thereof according to the acidity of the treated water.

The technical problems to be solved by the present disclosure are not limited to the technical problems mentioned above, and other technical problems not mentioned will be clearly understood by those of ordinary skill in the art to which the present disclosure pertains from the following description.

### Solution to Problem

To address the aforementioned issues, one aspect of the present disclosure provides an ammonia vent gas treatment system for an ammonia-propelled vessel, the system including: a vent gas treatment facility configured to recover and treat ammonia discharged from a consumer of ammonia fuel or from an intermediate component that supplies ammonia fuel to the consumer; a tank for storing ammonia water discharged from the vent gas treatment facility; and a gas pipe for returning ammonia gas generated in the tank to the vent gas treatment facility.

The system may further include a knockout drum (KOD) and may further include a recovery tank for storing ammonia water discharged from the KOD.

To address the aforementioned issues, another aspect of the present disclosure provides an ammonia vent gas treatment system including: a first tank for storing acidic water discharged from a consumer of fuel; and a vent gas treatment facility configured to recover and treat ammonia discharged from an ammonia fuel supply system that supplies ammonia fuel to the consumer, wherein the vent gas treatment facility is configured to use the acidic water stored in the first tank as ammonia wash water.

### Advantageous Effects of Invention

According to embodiments of the present disclosure described above, the system can maximally recover and reuse ammonia discharged during shutdown of an ammonia-propelled vessel, while additionally mitigating the problem of ammonia gas in the treatment of ammonia water recovered by the vent gas treatment facility.

Specifically, even upon recovering ammonia water through the vent gas treatment facility, this system can efficiently solve the problem where ammonia evaporates from residual ammonia remaining on the inner wall of the tank storing the recovered ammonia water, resulting in ammonia gas at concentrations exceeding the allowable level being discharged to the outside.

In addition, through a gas pipe that returns ammonia gas generated in the tank storing ammonia water discharged from the vent gas treatment facility to the vent gas treatment facility, this system can efficiently eliminate the problem where ammonia re-evaporates from the water in which ammonia is dissolved, causing ammonia at or above hazardous concentrations to be discharged to the outside.

Furthermore, the system can efficiently manage the ammonia concentration of the vent gas through a gas detector for automatically detecting the ammonia concentration of the vent gas, and can efficiently reduce the ammonia concentration of the vent gas by differently applying water supply or air blowing depending on whether the fuel supply valve is open.

Also, the system can use acidic water discharged from the fuel consumer as wash water for the vent gas treatment facility performing ammonia recovery treatment to increase the efficiency of ammonia vent gas treatment and, as needed, reduce the size of the vent gas treatment facility.

In addition, according to an embodiment of the present disclosure, during ammonia vent gas treatment using the aforementioned system, the neutralization of the discharge water can be more safely ensured by controlling one or more of the amount and supply direction of the acidic water supplied as ammonia wash water, depending on the acidity of the treated water.

Acidic water discharged from the fuel consumer may be used as wash water for the vent gas treatment facility performing ammonia recovery treatment to increase the efficiency of ammonia vent gas treatment and, as needed, reduce the size of the vent gas treatment facility.

In addition, according to an embodiment of the present disclosure, during ammonia vent gas treatment using the aforementioned system, the neutralization of the discharge water can be more safely ensured by controlling one or more of the amount and supply direction of the acidic water supplied as ammonia wash water, depending on the acidity of the treated water.

The advantages of the present disclosure are not limited to those described above, and other advantages not explicitly mentioned will become apparent to those skilled in the art from the following detailed description.

### Brief Description of Drawings

FIG. 1 is a diagram illustrating an ammonia vent gas treatment system for an ammonia-propelled vessel according to an embodiment of the present disclosure.
FIG. 2 is a diagram illustrating a configuration for recovering and reusing ammonia according to an embodiment of the present disclosure.
FIG. 3 is a diagram illustrating in detail a structure in which a knockout drum is used in a vent gas treatment facility according to an embodiment of the present disclosure.
FIG. 4 is a diagram illustrating a structure in which a scrubber/absorption tank is used in a vent gas treatment facility according to an embodiment of the present disclosure.
FIG. 5 is a diagram illustrating a control method using a gas detector according to an embodiment of the present disclosure.
FIGS. 6 and 7 are diagrams illustrating operations of a fuel supply valve in its open and closed states, respectively.
FIG. 8 is a diagram illustrating a basic configuration of an ammonia vent gas treatment system according to another embodiment of the present disclosure.
FIG. 9 is a diagram illustrating an advantage of using an acidic water scrubber in an ammonia vent gas treatment system according to another embodiment of the present disclosure.
FIG. 10 is a diagram illustrating a method of treating vent gas using an ammonia vent gas treatment system according to another embodiment of the present disclosure, in an ammonia-propelled vessel.
FIGS. 11 to 14 are diagrams illustrating a configuration for controlling a supply amount and supply direction of wash water, in an ammonia vent gas treatment system according to another embodiment of the present disclosure.

### Best Mode for Carrying out the Invention

To address the aforementioned issues, one aspect of the present disclosure provides an ammonia vent gas treatment system for an ammonia-propelled vessel, the system including: a vent gas treatment facility configured to recover and treat ammonia discharged from a consumer of ammonia fuel or from an intermediate component supplying ammonia fuel to the consumer; a tank for storing ammonia water discharged from the vent gas treatment facility; and a gas pipe for returning ammonia gas generated in the tank to the vent gas treatment facility.

The vent gas treatment facility may include a knockout drum (KOD), and the tank may include a recovery tank for storing ammonia water discharged from the KOD.

Meanwhile, the vent gas treatment facility may further include one or more of: a scrubber configured to spray an absorbent into vent gas discharged from the KOD to absorb ammonia; and an absorption tank configured to store the absorbent and absorb ammonia from the vent gas directly injected into the stored absorbent.

In this case, it is preferable that the tank further include a wastewater tank for recovering and storing ammonia-contaminated water generated in the absorption tank.

The system may also further include a gas detector on a pipe through which the vent gas is discharged, for detecting the concentration of ammonia gas in the vent gas.

In the aforementioned embodiments, the ammonia-propelled vessel preferably comprises: a fuel storage unit for storing ammonia; a fuel supply unit configured to receive ammonia from the fuel storage unit and supply the ammonia to the consumer; and a fuel supply valve provided between the fuel supply unit and the consumer to shut off the supply of ammonia.

The intermediate component may correspond to the fuel supply valve but is not limited thereto, and may be a new configuration not mentioned in the above paragraph, that is suitable for discharging ammonia between the consumer and the fuel supply device.

Meanwhile, when the concentration of ammonia gas in the vent gas discharged from the vent gas treatment facility reaches or exceeds a predetermined level, it is preferable to adjust the concentration of ammonia gas in the vent gas to at or below the predetermined level by supplying water or performing an air blow according to whether the fuel supply valve is open.

Specifically, when the fuel supply valve is open, the concentration of ammonia gas in the vent gas may be adjusted to at or below the predetermined level through water supply, and conversely, when the fuel supply valve is closed, it is preferable to adjust the concentration of ammonia gas in the vent gas to at or below the predetermined level through air blowing.

To address the aforementioned issues, another aspect of the present disclosure provides an ammonia vent gas treatment system including: a first tank for storing acidic water discharged from a consumer of fuel; and a vent gas treatment facility configured to recover and treat ammonia discharged from an ammonia fuel supply system that supplies ammonia fuel to the consumer, wherein the vent gas treatment facility is configured to use the acidic water stored in the first tank as ammonia wash water.

The system may further include, in the vent gas treatment facility, a second tank for storing discharge water neutralized using the wash water.

The system may further include a first scrubber for treating acidic gas discharged from the consumer, and the acidic water may be discharged from the first scrubber and stored in the first tank.

The vent gas treatment facility may include a second scrubber configured to use the acidic water stored in the first tank as ammonia wash water.

In this case, the first scrubber and the second scrubber may be defined as corresponding to an acidic water scrubber.

The acidic water scrubber may be smaller in size than a fresh water scrubber, but is not limited thereto, and the acidic water scrubber may instead have the same size as the fresh water scrubber but be utilized in a manner that improves ammonia treatment performance.

A pump for supplying the acidic water stored in the first tank to the vent gas treatment facility may be further included.

In an embodiment, a first pH meter for measuring the acidity of the acidic water stored in the first tank; and a first valve configured to control the degree of opening of a pipe for supplying the acidic water stored in the first tank to the vent gas treatment facility based on the acidity measured by the first pH meter, may be further included.

In another embodiment, the system may further include a second pH meter for measuring the acidity of the treated water in the vent gas treatment facility, and a second valve configured to control the degree of opening of a pipe for supplying the acidic water stored in the first tank to the vent gas treatment facility, based on the acidity measured by the second pH meter.

In another embodiment, the system may further include a third pH meter for measuring the acidity of the discharge water treated by the vent gas treatment facility, and a third valve configured to mix the acidic water stored in the first tank with the discharge water treated by the vent gas treatment facility to perform neutralization treatment, based on the acidity measured by the third pH meter.

In this case, the system may further include a third tank for storing the mixture of the acidic water stored in the first tank and the discharge water treated by the vent gas treatment facility so that they are neutralized.

In the foregoing description, the consumer may include an ammonia engine or a dual-fuel engine.

To address the aforementioned issues, another aspect of the present disclosure provides a method of treating vent gas in an ammonia-propelled vessel, the method including: storing in a first tank, acidic water discharged from a consumer of fuel; and recovering and treating ammonia discharged from an ammonia fuel supply system that supplies ammonia fuel to the consumer through a vent gas treatment facility, wherein recovering and treating the ammonia through the vent gas treatment facility comprises using the acidic water stored in the first tank as ammonia wash water.

Preferably, at least one of the amount of the acidic water supplied as the ammonia wash water and the supply direction thereof may be controlled according to the acidity of the treated water.

Specifically, the method may further comprise measuring the acidity of the acidic water stored in the first tank; and controlling the degree of opening of a pipe for supplying the acidic water stored in the first tank to the vent gas treatment facility, based on the measured acidity.

In another example, the method may further comprise measuring the acidity of the treated water in the vent gas treatment facility; and controlling the degree of opening of a pipe for supplying the acidic water stored in the first tank to the vent gas treatment facility, based on the measured acidity.

In another example, the method may further comprise measuring the acidity of the discharge water treated by the vent gas treatment facility; and, based on the measured acidity, mixing the acidic water stored in the first tank with the discharge water treated by the vent gas treatment facility to perform neutralization treatment.

### Mode for the Invention

Hereinafter, exemplary embodiments of the present disclosure will be described in detail with reference to the accompanying drawings so that those skilled in the art may readily implement the disclosure. However, the present disclosure may be implemented in various different forms and is not limited to the embodiments described herein. In the drawings, parts irrelevant to the description are omitted for clarity of explanation of the disclosure, and like reference numerals are assigned to like elements throughout the specification.

Throughout the specification, when a part is referred to as "including" or "comprising" a component, unless specifically stated otherwise, this means that it does not exclude other components but may further include other components.

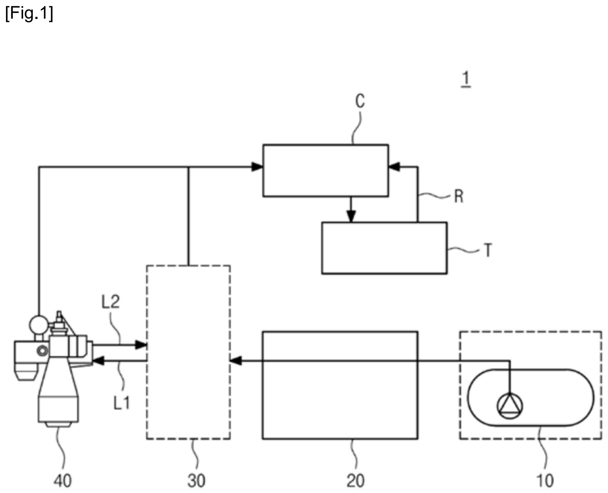

FIG. 1 is a diagram illustrating a vent gas treatment system for an ammonia-propelled vessel according to an embodiment of the present disclosure.

In the example shown in FIG. 1, an ammonia-propelled vessel 1 may include a fuel storage unit 10 that stores ammonia, a fuel supply unit 20 that receives ammonia from the fuel storage unit 10 and supplies the ammonia to a consumer 40 of ammonia fuel, and a fuel supply valve 30 that is provided between the fuel supply unit 20 and the consumer 40 and is capable of shutting off the supply of ammonia.

The fuel storage unit 10 may be a facility capable of storing ammonia, may include any type of facility, and may be a tank-type storage facility.

In the present specification, vessels are assumed to encompass not only merchant vessels that transport cargo from an origin to a destination, but also offshore structures that float at a fixed location at sea to perform specific operations.

The fuel supply unit 20 is connected to one or more fuel storage units 10, may heat ammonia to a temperature suitable for supply to the consumer 40, and may pressurize ammonia to a pressure suitable for supply to the consumer 40. For example, ammonia having a pressure of 50 to 300 bar and a temperature of 10 to 50 °C may be supplied to the consumer 40. The fuel supply unit 20 may be a low-flashpoint fuel supply system (LFSS).

The fuel supply valve 30 may be located between the fuel supply unit 20 and the consumer 40, and in the event of an abnormal operation of the fuel supply unit 20, may isolate the fuel supply unit 20 from the consumer 40 in a fuel supply line L1 to effectively shut off the fuel supply to the consumer 40. The fuel supply valve 30 may include valves for purposes such as double block and bleed, venting, pressure control, and nitrogen supply, as well as filters and various types of sensors. The fuel supply valve 30 may be a fuel valve train FVT, which is a mechanism in which control valves for controlling the supply of ammonia to the consumer 40 are intensively arranged.

The consumer 40 may be an ammonia propulsion engine or an ammonia power generation engine. The consumer 40 may propel the vessel using ammonia or generate electricity for use on the vessel.

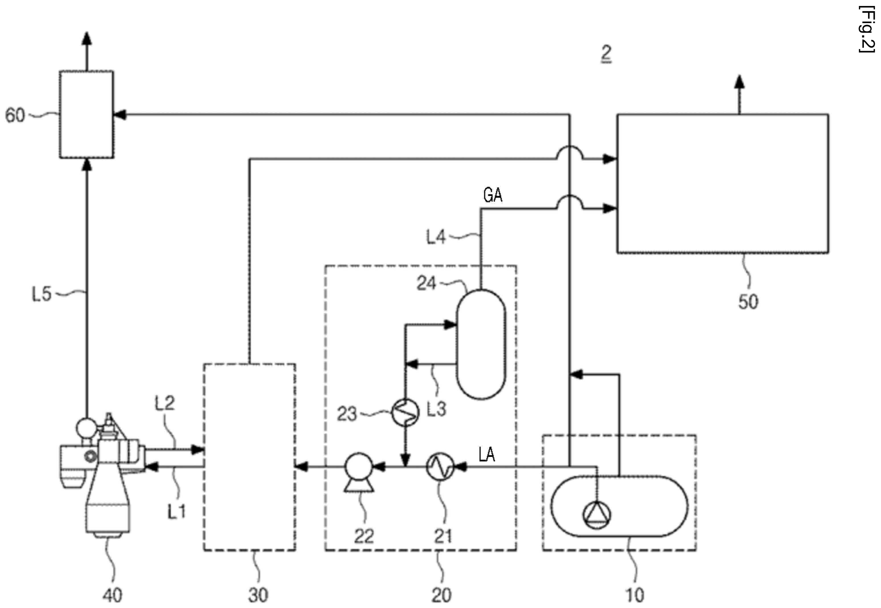

In the example of FIG. 1, a fuel recovery line L2 is additionally shown. The fuel recovery line L2 connects the consumer 40 to a recovery tank (not shown, described below with reference to FIG. 2) located in the fuel supply unit 20, and surplus ammonia remaining unburned at the consumer 40 may be transferred to the recovery tank (not shown) through the fuel recovery line L2. Such surplus ammonia may have a pressure of 50 to 300 bar.

In addition, the ammonia-propelled vessel 1 according to an embodiment further includes a vent gas treatment system that prevents ammonia leakage, and the vent gas treatment system according to an embodiment includes: a vent gas treatment facility C configured to recover and treat ammonia discharged from the consumer 40 of ammonia fuel or from an intermediate component supplying ammonia fuel to the consumer 40; a tank T for storing ammonia water discharged from the vent gas treatment facility C; and a gas pipe R for returning ammonia gas generated in the tank T to the vent gas treatment facility C.

The vent gas treatment facility C is a configuration that enables maximum recovery and reuse of ammonia discharged during shutdown of the ammonia-propelled vessel 1, and as will be described below, may include a knockout drum (KOD) and/or a combination of a scrubber and an absorption tank.

In addition, depending on the type of the vent gas treatment facility C, the tank T is a concept that may encompass a recovery tank, a wastewater tank, and the like.

To further mitigate the problem of ammonia gas in the treatment of ammonia water, an embodiment further includes a gas pipe R that returns ammonia gas generated in the tank T, which stores ammonia water discharged from the vent gas treatment facility C, to the vent gas treatment facility C.

Specifically, even upon recovering ammonia water through the vent gas treatment facility C, ammonia may evaporate from residual ammonia remaining on the inner wall of the tank T storing the recovered ammonia water, and ammonia gas having a concentration exceeding an allowable level may be discharged to the outside. However, in an embodiment, by further including the gas pipe R that returns ammonia gas generated in the tank T to the vent gas treatment facility C, as described above, this problem may be effectively solved.

FIG. 2 is a diagram illustrating a configuration for recovering and reusing ammonia according to an embodiment of the present disclosure.

Compared with FIG. 1, FIG. 2 shows that the fuel supply unit 20 includes a heater 21, a pump 22, a return cooler 23, and a recovery tank 24. In addition to the configuration shown in FIG. 2, the fuel supply unit 20 may include various valves and sensors for purposes such as pressure control, flow rate control, venting, and nitrogen supply, and may additionally include auxiliary components such as a service tank, a nitrogen supply system, a glycol system, a gas-liquid separator, and a vent mast.

The recovery tank 24 may separate surplus ammonia recovered from the consumer 40 into liquid ammonia LA and gaseous ammonia GA. The liquid ammonia LA separated by the recovery tank 24 may be recovered through the fuel recovery line L2. The fuel recovery line L2 may be provided with the return cooler 23 for cooling the liquid ammonia LA.

The liquid ammonia LA may be transferred to the fuel recovery line L2 through a recovery tank line L3 connecting the recovery tank 24 and the fuel recovery line L2.

Although not shown in the drawings, a line may be provided connecting the recovery tank 24 to the fuel storage unit 10, and the line may be used to transfer ammonia from the recovery tank 24 to the fuel storage unit 10.

As described above, surplus ammonia remaining unburned in the consumer 40 may be recovered, and the liquid ammonia LA separated in the liquid state by the recovery tank 24 may be supplied again to the fuel recovery line L2.

Meanwhile, the gaseous ammonia GA separated by the recovery tank 24 may be delivered to a treatment device 50 through a vent line L4. The treatment device 50 may reduce the concentration of the gaseous ammonia GA. The vent gas discharged from the treatment device 50 may be discharged to the outside through a vent mast (not shown).

Exhaust gas discharged from the consumer 40 may be delivered to a nitrogen oxide reduction device 60 along an exhaust gas line L5. The nitrogen oxide reduction device 60 receives liquid ammonia LA or gaseous ammonia GA from the fuel storage unit 10, uses the received ammonia as a reducing agent for nitrogen oxides (NOx), and reduces the nitrogen oxides (NOx) to remove the nitrogen oxides contained in the exhaust gas. The nitrogen oxide reduction device 60 may be a selective catalytic reduction (SCR) unit.

In an ammonia-propelled vessel 2, ammonia stored in the fuel storage unit 10 may be used for nitrogen oxide removal, thereby offering the advantage that no separate ammonia generation device or aqueous ammonia solution such as urea is required for the nitrogen oxide reduction device 60.

In the embodiment described above with reference to FIG. 2, the treatment device 50 is a device for treating the gaseous ammonia GA from the recovery tank 24 and may be regarded as one type of the vent gas treatment facility C of the embodiment in FIG. 1. The recovery tank 24 may also be regarded as an example of the tank T in the embodiment of FIG. 1, and the vent line L4 of FIG. 2 may also be regarded as an example of the gas pipe R for returning ammonia gas in the embodiment of FIG. 1.

However, in the embodiment of FIG. 1, the tank T refers to a tank that stores ammonia water discharged from a disaster prevention facility C, whereas in the embodiment of FIG. 2, the recovery tank 24 does not store ammonia water discharged from the treatment device 50, and therefore the recovery tank 24 of the embodiment of FIG. 2 may be distinguished from the tank T and gas pipe R in the narrow sense.

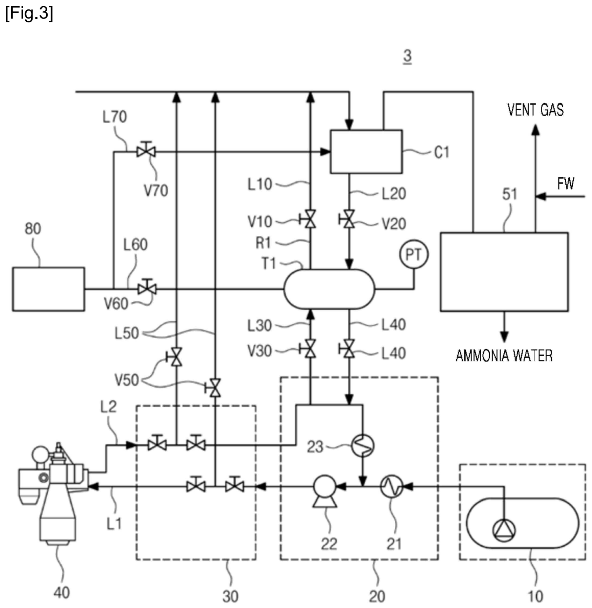

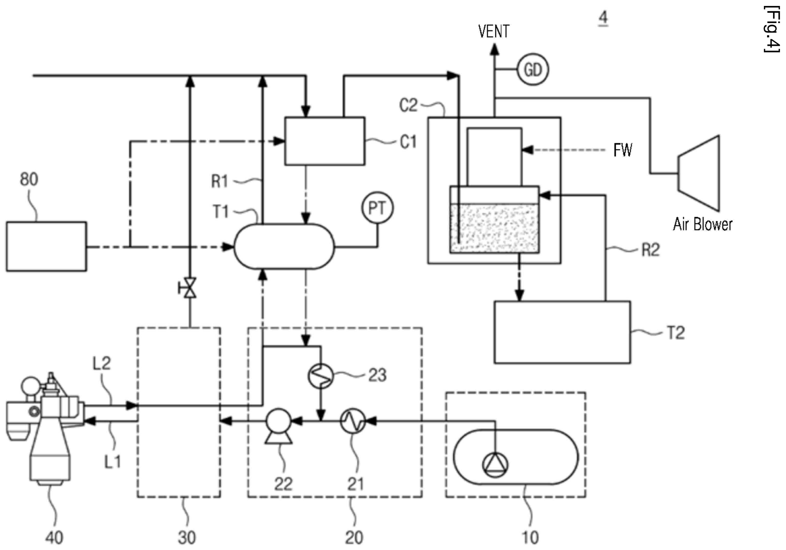

In FIG. 2, the treatment device 50 as a vent gas treatment facility is conceptually shown as potentially including additional components for solving the ammonia gas concentration problem described above in relation to FIG. 1, and the specific structures of such components are described in detail below with reference to FIGS. 3 and 4.

FIG. 3 is a diagram illustrating in detail a structure in which a knockout drum is used as the vent gas treatment facility according to an embodiment of the present disclosure.

Hereinafter, descriptions of parts common to those in FIG. 2 will be omitted, and a treatment device 51 described below may be in the form of an integrated scrubber (not shown) and absorption tank (not shown) to be described later with reference to FIG. 4; however, in the example of FIG. 3, such a description will be omitted.

Referring to FIG. 3, an ammonia-propelled vessel 3 according to an embodiment illustrates an example operated with a knockout drum (KOD: C1) as an example of the vent gas treatment facility C in the embodiment of FIG. 1. In addition, unlike the recovery tank 24 described in the embodiment of FIG. 2, the recovery tank in this example is referred to by a different reference numeral, T1, to indicate that it is a tank for storing ammonia water discharged from the KOD C1, which is an example of the vent gas treatment facility C, through a line L20.

In an embodiment, ammonia gas generated in the recovery tank T1, which stores ammonia water discharged from the KOD C1, may be returned to the recovery tank T1 through a gas pipe R1 referred to as a line L10.

The operation of the ammonia-propelled vessel 3 having the aforementioned configuration will now be described.

Ammonia fuel may be supplied from the fuel storage unit 10 to the consumer 40, discharged from the consumer 40, delivered to the fuel supply line L1 through the fuel recovery line L2, and delivered to the recovery tank T1 along line L30, in a manner similar to the embodiment of FIG. 2. In addition, the recovered ammonia water may be delivered to the KOD C1 along line L50.

That is, similar to the recovery tank 24 of FIG. 2, the recovery tank T1 according to an embodiment may also receive ammonia from the fuel recovery line L2 upon stopping the consumer 40, pressurize the ammonia, and supply the ammonia back to the fuel supply line L1.

The KOD C1 may receive ammonia fuel from the fuel supply valve 30 or the recovery tank T1 upon stopping the consumer 40, deliver gaseous ammonia to the treatment device 51, and return liquid ammonia to the recovery tank T1. In other words, unlike the recovery tank 24 of FIG. 2, the recovery tank T1 according to an embodiment additionally functions as a tank for storing ammonia water discharged from the KOD C1, which is an example of the vent gas treatment facility C.

In this situation, even when ammonia water is recovered to the recovery tank T1 through the KOD C1, ammonia may evaporate from residual ammonia remaining on the inner wall of the recovery tank T1, resulting in the release of ammonia gas to the outside at a concentration exceeding an allowable level. To address this issue, an embodiment employs the line L10 as the ammonia gas return pipe R1 to return the ammonia gas to the KOD C1, wherein the gas return pipe R1 is controllable by a valve V20.

The lines L10 and L50 may be integrated into a single pipe and connected to the KOD C1. For example, the line L10 and line L50 may be integrated into an inlet pipe P1 and connected to the KOD C1. For example, ammonia discharged from the fuel supply valve 30 and ammonia gas discharged from the recovery tank T1 may be integrated into a single inlet pipe P1 and connected to the KOD C1.

Ammonia may be separated into gas and liquid by moving from one side to the other within the KOD C1. To improve the gas-liquid separation performance of the KOD C1, the position and number of an inlet S1 formed at the end of the inlet pipe P1 may be limited. For example, the inlet S1 of the inlet pipe P1 may preferably be formed as a single inlet. For example, the inlet S1 of the inlet pipe P1 may preferably be formed at a certain distance from an outlet S2 of an outlet pipe P2.

By supplying ammonia to the KOD C1 through the single inlet S1 of the inlet pipe P1 formed at a predetermined distance, sufficient distance and space for separation into gas and liquid may be secured inside the KOD C1. With sufficient distance and space secured, the separation performance of the KOD C1 may be improved.

The gaseous ammonia separated in the KOD C1 may be sent to the treatment device 51 for processing, and the liquid ammonia separated may be recycled as fuel within the vessel.

Meanwhile, an inert gas supply unit 80 may supply inert gas to the recovery tank T1 or the KOD C1. The inert gas supply unit 80 may be configured to supply an inert gas such as nitrogen gas (N₂) or carbon dioxide gas (CO₂), and may include a device that generates the inert gas or a device that stores the inert gas. The inert gas supply unit 80 may supply the inert gas to the recovery tank T1 or the KOD C1 so that the ammonia in the recovery tank T1 or the KOD C1 does not come into contact with oxygen. The inert gas may be supplied to the recovery tank T1 to increase the pressure in the recovery tank T1.

FIG. 4 is a diagram illustrating a structure in which a scrubber/absorption tank is used as the vent gas treatment facility according to an embodiment of the present disclosure.

An ammonia-propelled vessel 4 shown in FIG. 4 basically includes all of the structures shown in FIG. 3, but further includes, in the upper right portion, an additional vent gas treatment facility C2 including: a scrubber C2-1 that sprays an absorbent into the vent gas discharged from the KOD C1 to absorb ammonia; and an absorption tank C2-2 that stores the absorbent and absorbs ammonia from the vent gas directly introduced into the stored absorbent.

The scrubber C2-1 is a vent gas treatment facility that sprays water or an absorbent into the contaminated gas introduced into the scrubber C2-1 so that contaminants are absorbed into the water or the like and removed, and allows the vent gas from which contaminants have been removed through the scrubber C2-1 to be discharged into the atmosphere.

Specifically, the scrubber C2-1 may include a packing section, may spray water or the like from the upper portion of the scrubber C2-1, and may inject ammonia gas from the lower portion of the scrubber C2-1 so that the water and the ammonia gas come into contact in the packing section and the ammonia gas is absorbed into the water. Accordingly, the vent gas from which ammonia gas has been removed may be discharged to the outside from the upper portion of the scrubber C2-1, and the ammonia water collected in the lower portion of the scrubber C2-1 may be discharged to the outside of the scrubber C2-1.

In the embodiment illustrated in FIG. 4, the vent gas treatment facility is exemplarily shown as having a structure in which the aforementioned scrubber C2-1 is combined with the absorption tank C2-2. However, the present disclosure is not necessarily limited thereto, and the scrubber C2-1 may perform the role of the vent gas treatment facility C2 alone, with the ammonia water discharged from the scrubber C2-1 being collected in the wastewater tank T2.

However, the embodiment illustrated in FIG. 4 demonstrates an example in which vent gas treatment performance is enhanced by coupling the absorption tank C2-2 to a lower end of the scrubber C2-1, and operating them together.

The absorption tank C2-2 is a storage facility that stores water, absorbent, or the like to a predetermined level or higher, and ammonia gas may be directly injected into the water or the like stored in the absorption tank C2-2 so that the ammonia may be absorbed into the water stored in the absorption tank C2-2.

The scrubber C2-1 continuously supplies water, whereby the concentration of ammonia water discharged from the scrubber C2-1 is relatively low, and ammonia may be supplied at a lower pressure compared to directly supplying ammonia gas into water. However, continuous water supply is required, and upon significant flow rate increases, treatment of ammonia gas may become difficult.

In contrast, the absorption tank C2-2 has a simple structure in that ammonia water is supplied into the stored water, does not require electric power, and may still treat ammonia gas even upon flow rate increases, such as in cases where ammonia must be urgently discharged. However, as the amount of ammonia dissolved in the stored water increases, the absorption capacity of the absorption tank C2-2 may decrease, and because ammonia gas is directly injected into the water, a higher pressure may be required to supply ammonia when the water level in storage becomes high.

Therefore, an embodiment employs both the scrubber C2-1 and the absorption tank C2-2, wherein the scrubber C2-1 is used for normal shutdown of the consumer 40, and the absorption tank C2-2 is used for treating large amounts of ammonia gas during emergency shutdown of the consumer 40. In this case, water must be supplied to each device for efficient absorption of ammonia gas, and it is preferable to treat the ammonia water generated in each device separately.

As such, by connecting the combination of the scrubber C2-1 and the absorption tank C2-2 to the KOD C1 for use as the vent gas treatment facility C2, the ammonia vent gas treatment effect may be maximized.

In the vent gas treatment facility C2, ammonia may be dissolved in water. For example, the water that dilutes the ammonia may be seawater, fresh water, or acidic water, but is not limited thereto. In another example, in the vent gas treatment facility C2, ammonia may be treated by a neutralizing agent.

As shown in FIG. 4, a lower end of the vent gas treatment facility C2, specifically a lower end of the absorption tank C2-2, may further include a wastewater tank T2 for recovering and storing ammonia-contaminated water generated from the absorption tank C2-2.

When parameters such as the volume, concentration, and pH of the ammonia-contaminated water in the absorption tank C2-2 exceed predetermined levels, the ammonia-contaminated water may be supplied to the wastewater tank T2. During the supply of ammonia-contaminated water to the wastewater tank T2, ammonia gas in the wastewater tank T2 may return to the vent gas treatment facility C2 through the gas pipe R2 to create space inside the wastewater tank T2.

During the process of recovering ammonia from the consumer 40 for ammonia fuel, the ammonia may be recovered to the vent gas treatment facility C2. Once the recovery of ammonia from the consumer of ammonia fuel to the vent gas treatment facility C2 is completed, ammonia-contaminated water in the vent gas treatment facility C2 may be supplied to the wastewater tank T2. During the supply of ammonia-contaminated water to the wastewater tank T2, ammonia gas in the wastewater tank T2 may return to the vent gas treatment facility C2 through the gas pipe R2 to create space within the wastewater tank T2.

In addition, by returning the ammonia gas generated in the wastewater tank T2 storing the ammonia water discharged from the absorption tank C2-2 to the absorption tank C2-2 or the scrubber C2-1 through the gas pipe R2, the problem of ammonia re-evaporating from the water in which ammonia has been dissolved, leaving residual ammonia at or above hazardous concentrations, may be efficiently eliminated.

The gas pipe R2 may be connected between the scrubber C2-1 and the absorption tank C2-2. For example, the ammonia gas returned through the gas pipe R2 may be supplied to a portion S3 between the scrubber C2-1 and the absorption tank C2-2. As the gas pipe R2 is connected between the scrubber C2-1 and the absorption tank C2-2, the ammonia reduction efficiency may be increased and the back pressure of the gas discharged from the wastewater tank T2 may be minimized.

For example, the absorption tank C2-2 may generate a back pressure of about 0.1 barg, and the scrubber C2-1 may generate a back pressure of about 0.01 barg, so it may be more effective for the exhaust gas discharged through the gas pipe R2 to be discharged to the portion S3 between the scrubber C2-1 and the absorption tank C2-2 rather than to the absorption tank C2-2.

Preferably, the gas pipe R2 is connected between the scrubber C2-1 and the absorption tank C2-2 while being connected above the maximum allowable water level in the absorption tank C2-2.

Meanwhile, as shown in FIG. 4, a preferred embodiment of the present disclosure further includes a gas detector GD on the vent pipe VENT through which the vent gas is discharged, for detecting the concentration of ammonia gas in the vent gas. The gas detector GD may be a means for measuring pH. This enables additional detection of the threat of discharging hazardous gas with a high concentration of ammonia gas to the outside.

Specifically, when the concentration of ammonia gas in the vent gas discharged from the vent gas treatment facility C2 is at or above a predetermined level T1, in an embodiment, depending on whether the fuel supply valve 30 is open, fresh water FW supply or an air blower may be provided to adjust the concentration of ammonia gas in the vent gas to at or below the predetermined level T1.

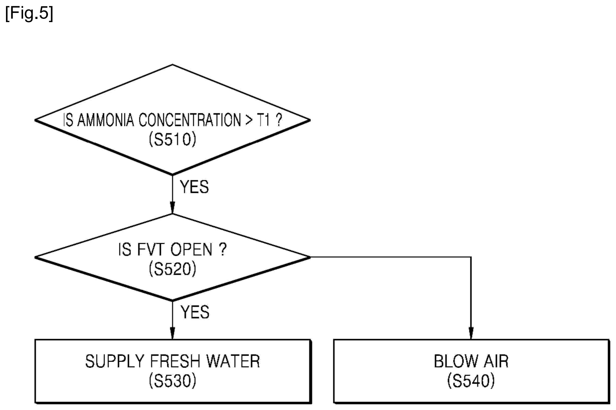

FIG. 5 is a diagram illustrating a control method using a gas detector according to an embodiment of the present disclosure.

As shown in FIG. 5, according to an embodiment, it is first determined whether the ammonia concentration detected by the gas detector GD is at or above a predetermined level T1 (S510). Although FIG. 5 illustrates determining the ammonia concentration, this may alternatively be implemented as a method of determining based simply on the pH level.

When the ammonia concentration detected by the gas detector GD is at or above the predetermined level T1, it may be further determined whether the fuel supply valve 30, for example, the FVT, is open (S520).

When the FVT is open, the concentration of ammonia gas in the vent gas may be adjusted to at or below the predetermined level T1 by supplying fresh water (S530). Conversely, when the FVT is closed, the concentration of ammonia gas in the vent gas may be adjusted to at or below the predetermined level T1 by air blowing (S540).

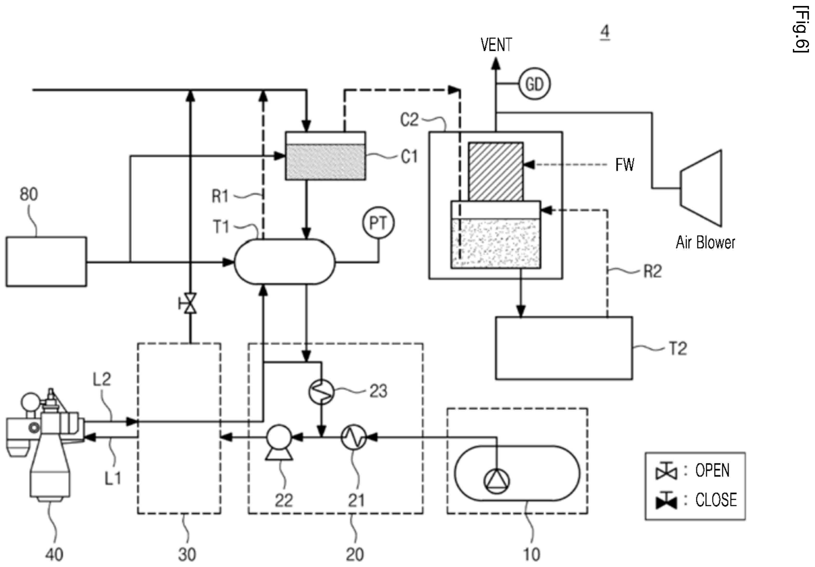

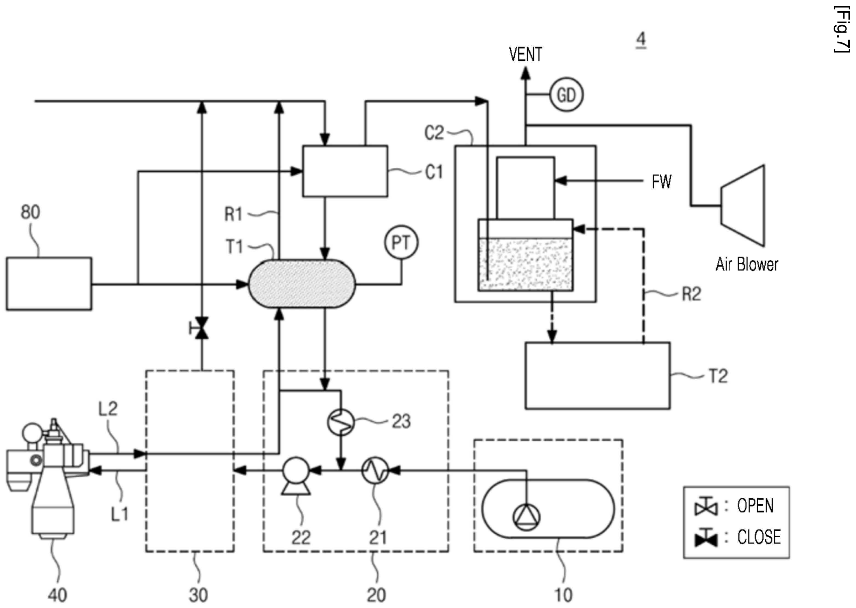

FIGS. 6 and 7 are diagrams illustrating operations of the fuel supply valve in its open/closed states, respectively.

Specifically, FIG. 6 illustrates an example of the operation with the fuel supply valve 30 open during a venting operation, while FIG. 7 illustrates an example of the operation with the fuel supply valve 30 closed during an ammonia water recovery operation.

Referring first to FIG. 6, a FVT 30 is opened and the venting operation may be started. In this case, the valves for recovering ammonia water and ammonia gas from the KOD C1 are in an open state, and the evaporated gas from the KOD C1 may be supplied to the absorption tank T1 for primary treatment.

As such, when the FVT 30 is in an open state and the gas detector GD detects ammonia gas at a hazardous concentration or higher, it is preferable to supply fresh water FW to the scrubber C2-1 to lower the concentration of ammonia gas. During the venting process, such fresh water supply as described above may be used in the scrubber C2-1 and/or the absorption tank C2-2.

Meanwhile, FIG. 7 illustrates the process of performing the ammonia water recovery operation when the KVT 30 is in a closed state. In this case, the ammonia water in the absorption tank C2-2 is discharged to the wastewater tank T2, which may be regarded as a process of emptying the absorption tank C2-2.

Accordingly, during such operation, when the gas detector GD detects a high ammonia concentration, it is preferable to reduce the concentration of ammonia gas by injecting air using an air blower, rather than injecting fresh water as with the FVT in the open state.

Hereinafter, an ammonia vent gas treatment system according to another embodiment of the present disclosure will be described.

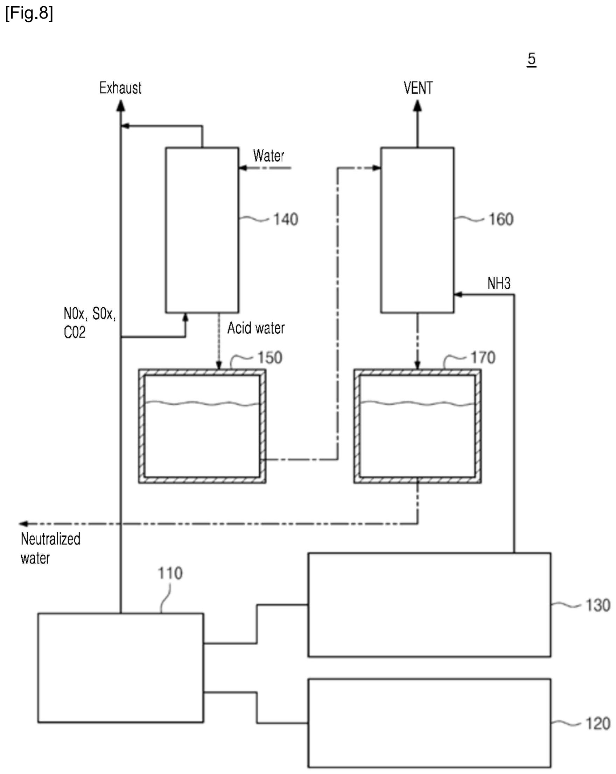

FIG. 8 is a diagram illustrating the basic configuration of an ammonia vent gas treatment system according to another embodiment of the present disclosure.

An ammonia-propelled vessel 5 refers to a vessel driven by power generated by consuming ammonia at a consumer 110 for ammonia fuel, and for this purpose, an ammonia fuel supply system 130 may supply ammonia to the consumer 110.

The ammonia fuel supply system 130 is connected to one or more fuel storage units (not shown) and may heat ammonia to a temperature suitable for supply to the consumer 110, and may pressurize ammonia to a pressure suitable for supply to the consumer 110. For example, ammonia having a pressure of 50 to 300 bar and a temperature of 10 to 50 °C may be supplied to the consumer 110. The ammonia fuel supply system 130 may be a low-flashpoint fuel supply system (LFSS).

Meanwhile, in the present specification, the vessel may include not only the aforementioned ammonia-propelled vessel 5 but also vessels using dual-fuel engines, in which case a diesel fuel supply system 120 for supplying diesel fuel to the consumer 110 may be included.

Furthermore, in the present specification, as long as the consumer 110 for fuel performs the basic function of discharging acidic water, it does not need to be construed as being limited to the aforementioned consumer of ammonia fuel or consumer of diesel.

The consumer 110, as described above, obtains propulsion power by using ammonia/diesel fuel, and may accordingly emit an acidic gas containing gases such as NOₓ, Sox, and CO₂. To treat the acidic gas, an embodiment may employ a first scrubber 140. As shown in FIG. 8, the first scrubber 140 may be configured to receive fresh water, absorb the acidic gas into the water, and store the acidic water containing the absorbed acidic gas in the first tank 150.

Meanwhile, in the ammonia-propelled vessel 5 or a dual-fuel engine vessel, the ammonia fuel supply system 130 discharges ammonia gas, and an embodiment employs a vent gas treatment facility 160 to recover and treat the ammonia from the ammonia gas.

As shown in FIG. 8, the vent gas treatment facility 160 may be in the form of a second scrubber 160, but is not necessarily limited thereto, and various configurations capable of recovering and treating ammonia gas using wash water may be employed.

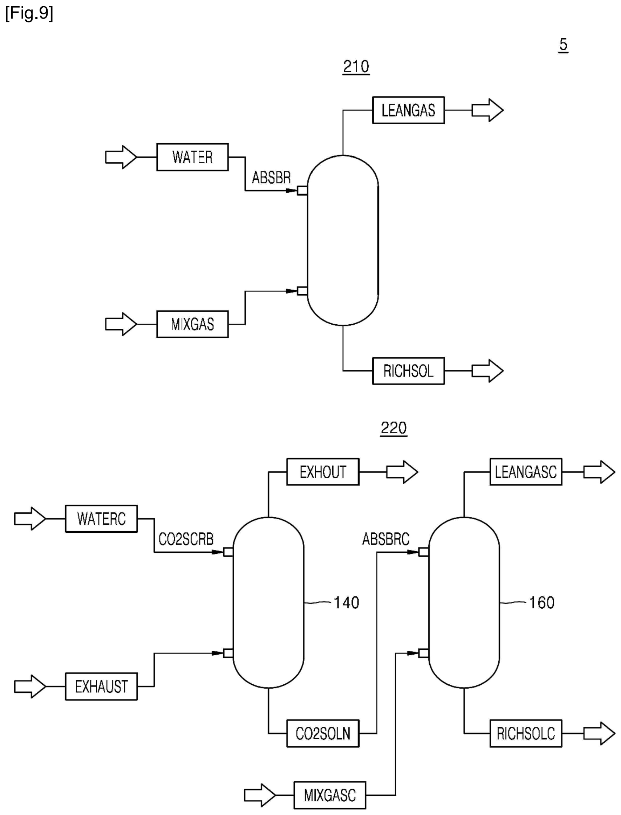

The vent gas treatment facility 160 according to an embodiment uses acidic water stored in the first tank 150 as wash water, rather than using fresh water as in the first scrubber 140, to increase ammonia recovery efficiency and, as needed, reduce the size of the vent gas treatment facility 160. The principle by which ammonia recovery efficiency is increased and/or size is reduced by using acidic water as wash water will be described in detail below with reference to FIG. 9.

Meanwhile, the vent gas treatment facility 160 may store in the second tank 170, and discharge the discharge water neutralized using the wash water.

FIG. 9 is a diagram illustrating an advantage of using an acidic water scrubber in an ammonia vent gas treatment system according to another embodiment of the present disclosure.

Carbon dioxide, when dissolved in water, forms bicarbonate (HCO³⁻) and may produce acidic water, and NOₓ, SOₓ, and the like similarly form acidic water. Meanwhile, ammonia, when dissolved in water, forms ammonium (NH⁴⁺) and produces alkaline water, and the solubility of ammonia has a characteristic of increasing as the initial pH of the water decreases.

Accordingly, by dissolving carbon dioxide in exhaust gas in the scrubber to produce acidic water and supplying this as wash water to the ammonia scrubber, it is possible to increase the performance of the scrubber, and in an embodiment, such a scrubber may be conceptually distinguished as an acidic water scrubber 220, in contrast to the fresh water scrubber 210.

Tables 1 and 2 below show simulation results for comparing the performance of the fresh water scrubber 210 and the acidic water scrubber 220, respectively.

**[Table 1]**

| Wash water supply conditions | | | Exhaust gas conditions | |
|---|---|---|---|---|
| Flow rate | | 370 kg/h | Flow rate | 50 kg/h |
| pH | | 6.7 | | |
| Composition | H₂O | 360 kg/h | Ammonia concentration | 1707 ppm |

**[Table 2]**

| Wash water supply conditions | | | Exhaust gas conditions | |
|---|---|---|---|---|
| Flow rate | | 370 kg/h | Flow rate | 50 kg/h |
| pH | | 4.2 | Ammonia concentration | 4.7 ppm |
| Composition | H₂O | 360 kg/h | | |
| | CO₂ | 0.13 kg/h | | |
| | HCO³⁻ | 0.13h | | |

As can be seen from Tables 1 and 2, supplying acidic water as wash water under the same wash water supply conditions (flow rate of 370 kg/h) significantly reduces the ammonia emission concentration.

This confirms that using acidic water as wash water enables performance equivalent to that of a fresh water-based scrubber even with smaller flow rate/size scrubbers.

In addition, the above reaction offers the advantage of neutralizing wastewater by converting ammonium in the ammonia water into ammonium carbonate.

In FIG. 9, the acidic water scrubber 220 may be configured through a combination of the first scrubber 140 and the second scrubber 160 of FIG. 8, and by utilizing acidic water as the wash water, the second scrubber 160 may, as needed, be designed to be smaller in size compared to a general fresh water scrubber 210.

Meanwhile, the acidic water scrubber 230 may also be applied as the second scrubber 160 separately from the first scrubber 140. In FIG. 9, wash water WATERC supplied to the acidic water scrubber 230 is labeled differently from wash water WATER of the fresh water scrubber 210 to indicate that acidic wash water is used. Likewise, exhaust gas LEANGASC and discharge water RICHSOLC from the acidic water scrubber 220 are labeled differently from exhaust gas LEANGAS and discharge water RICHSOL of the fresh water scrubber 210. As confirmed in Tables 1 and 2 above, when used for ammonia washing applications, the ammonia concentration in the exhaust gas LEANGASC of the acidic water scrubber 230 may be significantly lower than the ammonia concentration in the exhaust gas LEANGAS of the fresh water scrubber 210.

That is, in the notation of FIG. 9, "C" is used to distinguish the wash water, mixed gas, exhaust gas, and discharge water input to/output from the acidic water scrubber 220 from the wash water, mixed gas, exhaust gas, and discharge water input to/output from the fresh water scrubber 230. However, its usage does not necessarily mean acidic in all cases, and the discharge water from the acidic water scrubber 220 used for ammonia washing may be a neutralized discharge water obtained by neutralizing the acidic wash water with ammonia.

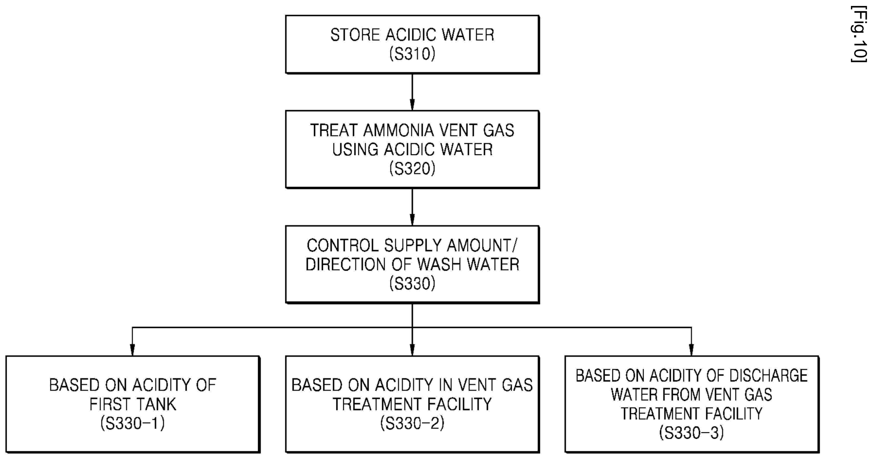

FIG. 10 is a diagram illustrating a method of treating vent gas using the ammonia vent gas treatment system according to another embodiment of the present disclosure in an ammonia-propelled vessel.

As described above, an embodiment includes storing acidic water discharged from the consumer of fuel in a first tank (S310) and recovering and treating ammonia discharged from the ammonia fuel supply system through a vent gas treatment facility (S320), wherein the recovery and treatment of ammonia through the vent gas treatment facility includes using the acidic water stored in the first tank as ammonia wash water. This enables improving ammonia recovery performance and/or designing a reduced size of the ammonia vent gas treatment facility, as described above with reference to FIG. 9.

Meanwhile, a preferred embodiment of the present disclosure controls one or more of the amount and supply direction of the acidic water supplied as ammonia wash water according to the acidity of the treated water (S330). This control may be performed based on the acidity of the first tank (S330-1), the acidity within the vent gas treatment facility (S330-2), the acidity of the discharge water from the vent gas treatment facility (S330-3), or a combination thereof, with each approach described in detail below.

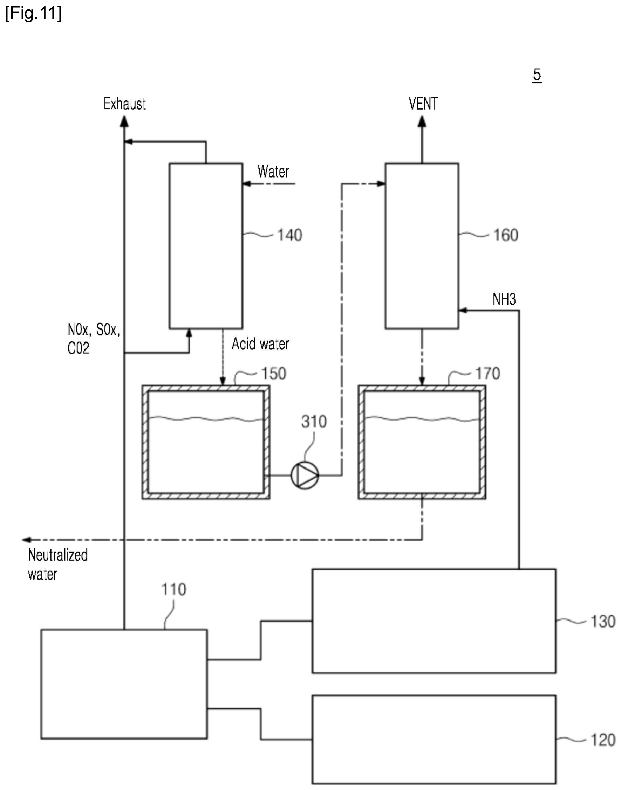

FIGS. 11 to 14 are diagrams illustrating configurations for controlling the supply amount and supply direction of wash water according to embodiments of the present disclosure.

First, FIG. 11 shows a structure that additionally includes a pump 310 in the configuration of FIG. 8 for supplying the acidic water stored in the first tank 150 to the vent gas treatment facility 160. By using the pump 310, greater design freedom may be secured in the arrangement of the first tank 150 and the vent gas treatment facility 160, and as needed, the operation of the pump 310 may be controlled to adjust the amount of acidic water introduced into the vent gas treatment facility 160.

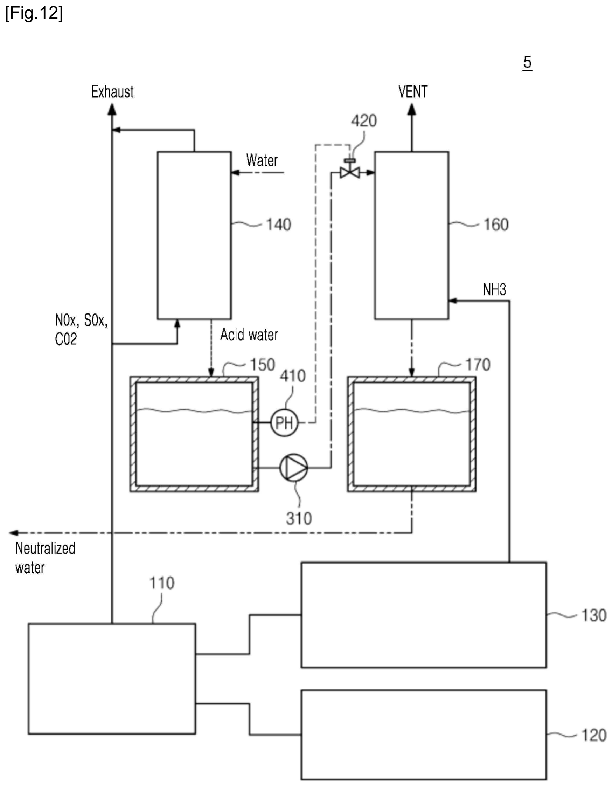

FIG. 12 shows a structure that additionally includes, in the configuration of FIG. 11, a first pH meter 410 for measuring the acidity of the acidic water stored in the first tank 150, and a first valve 420 configured to control the degree of opening of the piping for supplying the acidic water stored in the first tank 150 to the vent gas treatment facility 160 according to the acidity measured by the first pH meter 410.

For example, when the measurement result of the first pH meter 410 shows a low pH, this means that the acidic water has high washing performance, and accordingly, the first valve 420 may be controlled to reduce its degree of opening, thereby decreasing the flow rate of the acidic water introduced as wash water.

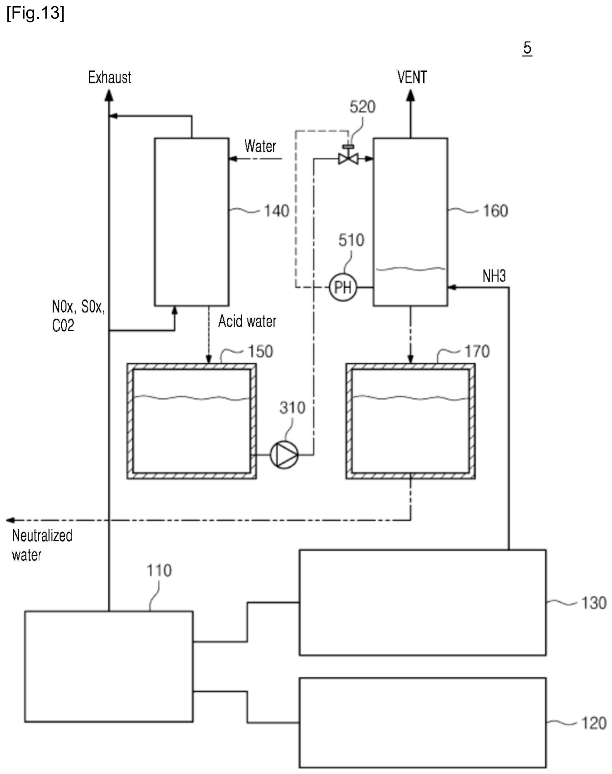

FIG. 13 shows a structure that additionally includes, in the configuration of FIG. 11, a second pH meter 510 for measuring the acidity of the treated water in the vent gas treatment facility, and a second valve 520 configured to control the degree of opening of the pipe for supplying the acidic water stored in the first tank 150 to the vent gas treatment facility 160 according to the acidity measured by the second pH meter 510.

This may be controlled to satisfy the acidity standard inside the vent gas treatment facility 160 by controlling the supply amount of wash water according to wastewater discharge regulations.

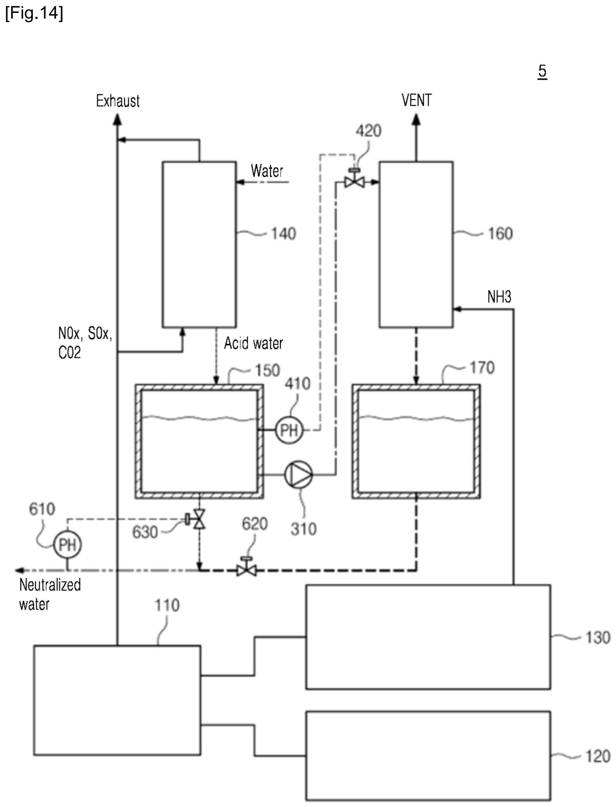

FIG. 14 shows a structure that additionally includes, in the configuration of FIG. 12, a third pH meter 610 for measuring the acidity of the discharge water treated by the vent gas treatment facility 160, and third valves 620 and 630 configured to mix the acidic water stored in the first tank 150 with the discharge water treated by the vent gas treatment facility 160 for neutralization treatment according to the acidity measured by the third pH meter 610.

That is, this configuration is designed to neutralize the discharge water by mixing acidic water with alkaline water containing ammonia, based on the pH of the discharge water. To efficiently perform such neutralization, a third tank (not shown) or a neutralization tank (not shown) may be further included, and the third pH meter 610 may be placed in such a third tank.

The ammonia vent gas treatment system and control method using the same according to another embodiment of the present disclosure shown in FIGS. 8 to 14 may be applied to the ammonia-propelled vessels 1, 2, 3, and 4 shown in FIGS. 1 to 7, or to the vent gas treatment system and control method using the same according to an embodiment of the present disclosure that are applicable to the ammonia-propelled vessels 1, 2, 3, and 4.

Conversely, the vent gas treatment system and control method using the same shown in FIGS. 1 to 7 may be applied to the ammonia-propelled vessel 5 shown in FIGS. 8 to 14, or to the vent gas treatment system and control methods using the same according to another embodiment of the present disclosure applicable to the ammonia-propelled vessel 5.

For example, in implementing at least one of the treatment device 50, vent gas treatment facility 50, KOD C1, first vent gas treatment facility C2, scrubber C2-1, and absorption tank C2-2 shown in FIGS. 1 to 7, the configuration and operating principle of at least one of the first scrubber 140, first tank 150, second tank 170, vent gas treatment facility 160, fresh water scrubber 210, and acidic water scrubber 220 shown in FIGS. 8 to 14 may be applied, and vice versa.

As described above, the detailed description of the preferred embodiments of the present disclosure has been provided to enable those skilled in the art to implement and practice the present disclosure. Although the preferred embodiments of the present disclosure have been described with reference to the above, it will be understood by those skilled in the art that various modifications and changes can be made to the present disclosure without departing from the scope of the invention.

For example, those skilled in the art may use each of the configurations described in the aforementioned embodiments in combination with one another.

Accordingly, the present disclosure is not intended to be limited to the embodiments shown herein, but is intended to grant the broadest scope consistent with the principles and novel features disclosed herein.

As described above, the detailed description of the preferred embodiments of the present disclosure has been provided to enable those skilled in the art to implement and practice the present disclosure. Although the preferred embodiments of the present disclosure have been described with reference to the above, it will be understood by those skilled in the art that various modifications and changes can be made to the present disclosure without departing from the scope of the invention. For example, those skilled in the art may use each of the configurations described in the aforementioned embodiments in combination with one another.

Accordingly, the present disclosure is not intended to be limited to the embodiments shown herein, but is intended to grant the broadest scope consistent with the principles and novel features disclosed herein.

### Industrial Applicability

The vent gas treatment system for an ammonia-propelled vessel according to the embodiments of the present disclosure described above can be applied not only to merchant vessels that transport cargo from an origin to a destination, but also to various marine vessels that use ammonia as fuel.

## Claims

1. A vent gas treatment system for an ammonia-propelled vessel, the system comprising:
a vent gas treatment facility configured to recover and treat ammonia discharged from a consumer of ammonia fuel or from an intermediate component that supplies ammonia fuel to the consumer;
a wastewater tank for storing ammonia water discharged from the vent gas treatment facility; and
a gas pipe for returning ammonia gas generated in the tank to the vent gas treatment facility.

2. The vent gas treatment system for an ammonia-propelled vessel of claim 1,
wherein the vent gas treatment facility further comprises:
a scrubber configured to spray an absorbent into vent gas to absorb ammonia; and
an absorption tank configured to store the absorbent and absorb ammonia from the vent gas directly injected into the stored absorbent.

3. The vent gas treatment system for an ammonia-propelled vessel of claim 2,
wherein ammonia gas generated in the wastewater tank is returned to the vent gas treatment facility through a gas pipe connected to a space between the scrubber and the absorption tank.

4. The vent gas treatment system for an ammonia-propelled vessel of claim 3, the system further comprising a gas detector, which is on a pipe through which the vent gas is discharged, for detecting a concentration of ammonia gas in the vent gas.

5. The vent gas treatment system for an ammonia-propelled vessel of claim 1,
wherein the intermediate component corresponds to a fuel supply valve, and
when a concentration of ammonia gas in the vent gas discharged from the vent gas treatment facility is at or above a predetermined level,
the concentration of ammonia gas in the vent gas is adjusted to at or below the predetermined level by supplying water when the fuel supply valve is open.

6. The vent gas treatment system for an ammonia-propelled vessel of claim 5,
wherein the concentration of ammonia gas in the vent gas is adjusted to at or below the predetermined level by air blowing when the fuel supply valve is closed.

7. The vent gas treatment system for an ammonia-propelled vessel of claim 1, further comprising a knockout drum (KOD), and
a recovery tank for storing ammonia water discharged from the KOD.

8. The vent gas treatment system for an ammonia-propelled vessel of claim 7,
wherein ammonia gas generated in the recovery tank and ammonia recovered from the intermediate component are supplied to the KOD through a single inlet pipe.

9. The vent gas treatment system for an ammonia-propelled vessel of claim 1,
wherein the ammonia-propelled vessel comprises:
a fuel storage unit for storing ammonia;
a fuel supply unit configured to receive ammonia from the fuel storage unit and supply the ammonia to the consumer; and
a fuel supply valve provided between the fuel supply unit and the consumer to shut off a supply of the ammonia.
